# EUROPÄISCHE PATENTSCHRIFT

(11) **EP 1 530 692 B1**
(45) Veröffentlichungstag und Bekanntmachung des Hinweises auf die Patenterteilung: **25.05.2011**
(21) Anmeldenummer: 03792346.3
(22) Anmeldetag: 18.08.2003
(51) Int. Cl.: F16H 61/02

(54) **VERFAHREN ZUM STEUERN EINES ANTRIEBSSTRANGES EINES FAHRZEUGS**
METHOD FOR CONTROLLING A DRIVETRAIN IN A MOTOR VEHICLE
PROCEDE POUR COMMANDER LA TRANSMISSION D'UN VEHICULE

(30) Priorität: 21.08.2002 DE 10238127
(43) Veröffentlichungstag der Anmeldung: 18.05.2005
(73) Patentinhaber: ZF FRIEDRICHSHAFEN Aktiengesellschaft, 88038 Friedrichshafen (DE)
(72) Erfinder: PELCHEN, Christoph, 88069 Tettnang (DE); BAASCH, Detlef, 88048 Friedrichshafen (DE); SCHMOHL, Barbara, 88048 Friedrichshafen (DE); GAZYAKAN, Ünal, 88045 Friedrichshafen (DE)
(86) Internationale Anmeldenummer: PCT/EP2003/009104
(87) Internationale Veröffentlichungsnummer: WO 2004/018905

(56) Entgegenhaltungen:
- DE-A- 19 747 262
- GB-A- 2 304 835
- US-A- 4 677 879

## Beschreibung

Die Erfindung betrifft ein Verfahren zum Steuern eines Antriebsstranges eines Fahrzeugs gemäß der im Oberbegriff des Patentanspruches 1 näher definierten Art.

Ein solches Verfahren ist aus US A-4,677,879 bekannt. .Aus der Praxis sind Antriebsstränge von Fahrzeugen, insbesondere von Geländefahrzeugen, bekannt, die jeweils eine Antriebsmaschine, ein Mehrgruppengetriebe und einen Abtrieb aufweisen. Die Ausführung eines Antriebsstranges mit einem Mehrgruppengetriebe bietet die Möglichkeit, viele Gangstufen bei möglichst wenig Zahnradpaarungen zur Verfügung stellen zu können.

Ein Mehrgruppengetriebe stellt in der Praxis eine Kombination aus mehreren Getriebeeinheiten, wie beilspielsweise einer sogenannten Vorschaltgruppe, einem Hauptgetriebe sowie einer Nachschaltgruppe bzw. einer Rangegruppe, dar. Um einen hohen Schaltkomfort und möglichst viele Gangstufen bereitstellen zu können, ist ein Hauptgetriebe vorzugweise als Automatgetriebe ausgeführt, das beilspielsweise sechs Gangstufen für Vorwärtsfahrt und einen Rückwärtsgang hat. Die Kombination eines derartigen Automatgetriebes mit einer nachgeschalteten Rangegruppe führt zu einer Erweiterung der Gangfolge eines aus Hauptgetriebe und Rangegruppe aufgebauten Mehrgruppengetriebes.

Eine Rangegruppe als Getriebeeinheit ist dadurch gekennzeichnet, daß eine Eingangsdrehzahl der Rangegruppe immer ins "Langsame" übersetzt wird. Darüber hinaus ist für eine Rangegruppe charakterisierend, daß in einer Rangegruppe eine derartige Drehmomentsteigerung erfolgt, daß Fahrzeuge bzw. Geländefahrzeuge auch bei großen Steigungen noch betrieben werden können. Aufgrund der hohen Drehmomentsteigerung werden Rangegruppen immer einem Hauptgetriebe eines Mehrgruppengetriebes nachgeschaltet, wodurch eine Durchleitung hoher Drehmomente durch das Hauptgetriebe vermieden wird.

Rangegruppen sind in der Praxis in Vorgelegebauweise oder kompakt als Planetengetriebe ausgeführt. Eine Änderung einer Übersetzung einer Rangegruppe erfolgt durch Schaltelemente, mittels welchen zwischen einer ersten Übersetzung ("low") und einer zweiten Übersetzung ("high") umgeschaltet wird. Dabei steht einem Fahrer bei eingelegter erster Übersetzung "low" in der Rangegruppe in Kombination mit dem Hauptgetriebe ein Übersetzungsbereich zur Verfügung, der für einen Betrieb eines Fahrzeuges in einem Gelände mit großen Steigungen bei niedrigen Fahrzeuggeschwindigkeiten vorteilhaft ist.

Die zweite Übersetzung "high" der Rangegruppe ist weniger verlustbehaftet, so daß bei normalen Geländebedingungen und auch bei höheren Fahrgeschwindigkeiten die zweite Übersetzung "high" bevorzugt in der Rangegruppe eingelegt wird.

Beim Umschalten zwischen den beiden Übersetzungen "low" und "high" der Rangegruppe ist eine Synchronisierung zuzuschaltender Schaltelemente der Rangegruppe der jeweils einzulegenden Übersetzung "low" oder "high" erforderlich, da aufgrund des hohen Übersetzungssprunges in der Rangegruppe zwischen abzuschaltenden Schaltelementen und zuzuschaltenden Schaltelementen hohe Differenzdrehzahlen vorliegen. Die Differenzdrehzahlen werden über geeignete mechanische Synchronisierungen ausgeglichen, die in der Rangegruppe entweder als separate Bauteile ausgeführt sind oder in die Schaltelemente der Rangegruppe integriert sind. Bei letztgenannter Alternative sind die Schaltelemente meist als reibschlüssige Lamellenkupplungen oder Lamellenbremsen ausgeführt.

Nachteilig dabei ist jedoch, daß Rangegruppen, die mit separaten mechanischen Synchronisierungen oder mit reibschlüssigen Schaltelementen ausgeführt sind, große Bauteilabmessungen aufweisen und viel Bauraum benötigen, da sie aufgrund der hohen Bauteilbeanspruchungen beim Synchronisieren entsprechend robust ausgeführt werden müssen. Des weiteren verursachen separate mechanische Synchronisierungen oder reibschlüssige Schaltelemente hohe Herstellkosten, was jedoch unwirtschaftlich ist.

Aufgabe der vorliegenden Erfindung ist es daher, ein Verfahren zum Steuern eines Antriebsstranges eines Fahrzeugs zur Verfügung zu stellen, mit welchem eine Änderung einer Übersetzung einer Rangegruppe mit kompakter und kostengünstiger Bauweise durchführbar ist.

Erfindungsgemäß wird diese Aufgabe mit einem Verfahren gemäß den Merkmalen des Patentanspruches 1 gelöst.

Dadurch, daß bei einer Übersetzungsänderung der Rangegruppe eine Synchronisierung eines zuzuschaltenden Schaltelementes der Rangegruppe über eine Ansteuerung von Schaltelementen des Automatgetriebes durchgeführt wird, kann in vorteilhafter Weise auf mechanische Synchronisierungen in der Rangegruppe - als separate Bauteile oder in Schaltelemente der Rangegruppe integriert - verzichtet werden. Damit besteht die Möglichkeit, eine Rangegruppe im Vergleich zu aus der Praxis bekannten Mehrgruppengetrieben mit einem konstruktiv wesentlich geringeren Aufwand auszuführen, wodurch die Rangegruppe einen geringeren Bauraumbedarf aufweist.

Des weiteren bietet die Synchronisierung der Rangegruppe über das Automatgetriebe bei einer Änderung der Übersetzung der Rangegruppe den Vorteil, daß Schaltelemente der Rangegruppe als formschlüssige Schaltelemente, vorzugsweise als Klauenkupplungen, ausgeführt werden können, über welche hohe Drehmomente übertragen werden können, die wenig Bauraum beanspruchen und die geringe Herstellkosten verursachen.

Zusätzlich ist von Vorteil, daß sich durch den Entfall der mechanischen Synchronisierungen in der Rangegruppe eine Reduktion von Schleppmomenten geöffneter mechanischer Synchronisierungen der Rangegruppe ergibt und eine Wärmeentwicklung in der Rangegruppe wesentlich herabgesetzt wird. Die Schleppmomente entstehen bei mechanischen Synchronisierungen im wesentlichen durch Flüssigkeitsreibung, die zwischen Reibbelägen reibschlüssiger Kupplungen oder Bremsen durch Öl verursacht wird.

Ein weiterer wesentlicher Vorteil des erfindungsgemäßen Verfahrens ist, daß durch die Synchronisierung der Rangegruppe über das Automatgetriebe eine Zugkraftunterbrechungszeit im Vergleich zu aus der Praxis bekannten Verfahren erheblich reduziert wird, da eine Veränderung einer Antriebsdrehzahl einer Antriebsmaschine bei Bedarf über eine geeignete Ansteuerung von Schaltelementen des Automatgetriebes auf einfache Art und Weise in kurzer Zeit erfogen kann.

Weitere Vorteile und vorteilhafte Weiterbildungen der Erfindung ergeben sich aus den Patentansprüchen und aus den nachfolgend anhand der Zeichnung prinzipmäßig beschriebenen Ausführungsbeispielen.

### Es zeigt:

- Fig. 1: eine stark schematisierte Darstellung eines Antriebsstranges mit einer Antriebsmaschine, einem Anfahrelement und einem aus einem Automatgetriebe und einer Rangegruppe beste- henden Mehrgruppengetriebe;
- Fig. 2: ein schematisch dargestellter Automatgetrie- bewählhebel, welcher eine Offroadposition aufweist;
- Fig. 3: ein Balkendiagramm, in welchem Übersetzungen eines Mehrgruppengetriebes in Abhängigkeit von Übersetzungen eines Automatgetriebes und einer Rangegruppe dargestellt sind;
- Fig. 4: ein Diagramm, in welchem für einzelne Gangstufen des Mehrgruppengetriebes gemäß Fig. 3 jeweils ein Verlauf einer Fahrzeug- geschwindigkeit über einer Drehzahl einer Antriebsmaschine dargestellt ist;
- Fig. 5: mehrere Verläufe von Drehmomenten, welche sich während einer Änderung einer Über- setzung in der Rangegruppe des Mehrgrup- pengetriebes an Bauteilen des Antrieb- sstranges gemäß Fig. 1 einstellen;
- Fig. 6: ein Drehzahl-Geschwindigkeits-Diagramm mit mehreren Verläufen, welche mit den in Fig. 5 dargestellten Drehmomentverläufen korre- spondieren;
- Fig. 7: ein weiteres Ausführungsbeispiel eines Auto- matgetriebewählhebels, der mit einem Aus- wahlschalter zur Vorgabe einer Übersetzung in der Rangegruppe kombiniert ist;
- Fig. 8: ein Balkendiagramm, in welchem verschiedene Gangstufen eines über den Automatgetrie- bewählhebel und den Auswahlschalter gemäß Fig. 7 ansteuerbaren Mehrgruppengetriebes dargestellt sind;
- Fig. 9: ein Diagramm, in welchem für einzelne Gangstufen des Mehrgruppengetriebes gemäß Fig. 8 jeweils ein Verlauf einer Fahrzeug- geschwindigkeit über einer Drehzahl einer Antriebsmaschine dargestellt ist;
- Fig. 10: mehrere Verläufe von Drehmomenten, welche sich während einer in Fig. 9 schematisch dargestellten Änderung der Übersetzung in der Rangegruppe des Mehrgruppengetriebes an Bauteilen des Antriebsstranges gemäß Fig. 1 einstellen und
- Fig. 11: mehrere Drehzahlverläufe von Bauteilen des Mehrgruppengetriebes, welche mit den Drehmo- mentverläufen gemäß Fig. 10 korrespondieren.

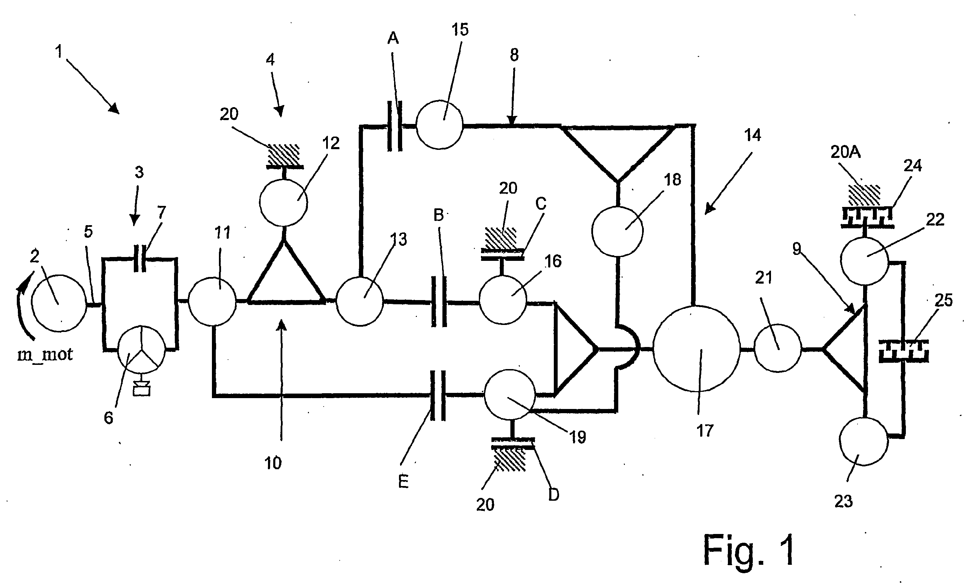

Bezug nehmend auf Fig. 1 ist ein Antriebsstrang 1 eines nicht näher dargestellten Fahrzeuges, insbesondere eines Geländefahrzeugs, stark schematisiert dargestellt. Der Antriebsstrang 1 besteht vorliegend aus einer Antriebsmaschine 2, einem Anfahrelement 3 und einem Mehrgruppengetriebe 4. Die Antriebsmaschine 2 ist als eine Brennkraftmaschine ausgeführt, deren Antriebsmoment m_mot über eine Ausgangswelle 5 an das mit einem hydrodynamischen Drehmomentwandler 6 ausgeführte Anfahrelement 3 gegeben wird. Zusätzlich ist das Anfahrelement 3 mit einer geregelten Wandlerkupplung 7 ausgebildet, mit der der hydrodynamische Drehmomentwandler 6 überbrückbar ist.

Das dem Anfahrelement 3 in Reihe nachgeschaltete Mehrgruppengetriebe 4 ist vorliegend aus einem Automatgetriebe 8 und einer nachgeschalteten Rangegruppe 9 gebildet, wobei das Automatgetriebe 8 das Hauptgetriebe des Mehrgruppengetriebes 4 darstellt.

Die vorliegende Getriebekombination des vorliegenden Mehrgruppengetriebes 4 besteht vorliegend aus dem lastschaltbaren Automatgetriebe 8 und einer klauengeschalteten Getriebegruppe mit Reduktionsstufe bzw. der Rangegruppe 9 mit automatisierter Betätigung. Diese Getriebekombination ist mit einem elektronischen Steuersystem versehen, welches aus einem Automatgetriebesteuergerät, aus einem Rangegruppensteuergerät und einem Antriebsmaschinensteuergerät besteht.

Diese drei nicht näher dargestellten Steuergeräte sind miteinander vernetzt und tauschen die zur Ansteuerung des Antriebsstranges 1 erforderlichen Signale untereinander aus. Durch eine koordinierte Ansteuerung des Automatgetriebes 8 und der Rangegruppe 9 wird die klauengeschaltete Rangegruppe 9 bei einem Übersetzungswechsel in der Rangegruppe 9 über das Automatgetriebe 8 synchronisiert. Die Synchronisierung der Rangegruppe 9 bzw. der jeweils zuzuschaltenden Schaltelemente der Rangegruppe 9 erfolgt durch eine geeignete Ansteuerung der Schaltelemente A bis E des Automatgetriebes 8.

Das Automatgetriebe 8 weist einen ersten Planetenradsatz 10 auf, wobei ein Hohlrad 11 des ersten Planetenradsatzes 10 mit dem Anfahrelement 3 verbunden ist. Mehrere Planeten wälzen sich zwischen dem Hohlrad 11 und einem Sonnenrad 12 des ersten Planetenradsatzes 10 ab und sind auf einem Planetenträger 13 drehbar geführt. Der Planetenträger 13 des ersten Planetenradsatzes 10 ist mit einem Schaltelement A und einem Schaltelement B verbunden, wobei die Schaltelemente A und B als reibschlüssige Lamellenkupplungen ausgeführt sind.

Das Hohlrad 11 des ersten Planetenradsatzes 10 ist mit einem als reibschlüssige Lamellenkupplung ausgebildeten Schaltelement E verbunden. Über die Schaltelemente A, B und E ist jeweils eine Verbindung zwischen dem ersten Planetenradsatz 10 und einem als doppelter Planetenradsatz ausgeführten zweiten Planetenradsatz 14 herstellbar, der im wesentlichen einem Ravigneaux-Planetenradsatz entspricht.

Der zweite Planetenradsatz 14 weist ein erstes Sonnenrad 15 und ein zweites Sonnenrad 16 auf, wobei sich zwischen dem ersten Sonnenrad 15 und einem gemeinsamen Hohlrad 17 sowie dem zweiten Sonnenrad 16 und dem gemeinsamen Hohlrad 17 jeweils mehrere Planeten abwälzen, welche auf einem ersten Planetenträger 18 bzw. einem zweiten Planetenträger 19 des zweiten Planetenradsatzes 14 drehbar gehalten sind.

Das Sonnenrad 12 des ersten Planetenradsatzes 10 ist ortsfest in einem Getriebegehäuse 20 des Automatgetriebes 8 fixiert. Das zweite Sonnenrad 16 des zweiten Planetenradsatzes 14 ist vorzugsweise über ein als reibschlüssige Lamellenbremse ausgeführtes Schaltelement C mit dem Getriebegehäuse 20 verbunden. Darüber hinaus ist der zweite Planetenträger 19 des zweiten Planetenradsatzes 14 über ein als reibschlüssige Lamellenbremse ausgeführtes Schaltelement D mit einem ortsfest in dem Getriebegehäuse 20 angeordneten Bauteil oder direkt mit dem Getriebegehäuse 20 verbindbar.

Das gemeinsame Hohlrad 17 des zweiten Planetenradsatzes ist mit einem Sonnenrad 21 der Rangegruppe 9 verbunden, wobei sich zwischen dem Sonnenrad 21 und einem Hohlrad 22 der Rangegruppe 9 mehrere Planeten abwälzen, die auf einem Planetenträger 23 der Rangegruppe 9 drehbar gelagert sind, der wiederum mit dem Abtrieb verbünden ist.

Zur Darstellung einer ersten Übersetzung "low" der Rangegruppe 9 ist das Hohlrad 22 der Rangegruppe 9 über ein erstes Schaltelement 24 mit einem Getriebegehäuse 20A der Rangegruppe 9 derart verbindbar, daß das Hohlrad 22 nicht drehbar mit dem Getriebegehäuse 20A der Rangegruppe 9 verbunden ist. Eine zweite Übersetzungsstufe "high" der Rangegruppe 9 ist dann eingelegt, wenn das erste Schaltelement 24 geöffnet bzw. ausgerückt ist und ein zwischen dem Hohlrad 22 und dem Planetenträger 23 angeordnetes zweites Schaltelement 25 der Rangegruppe 9 geschlossen ist und das Hohlrad 22 mit dem Planetenträger 23 verbindet.

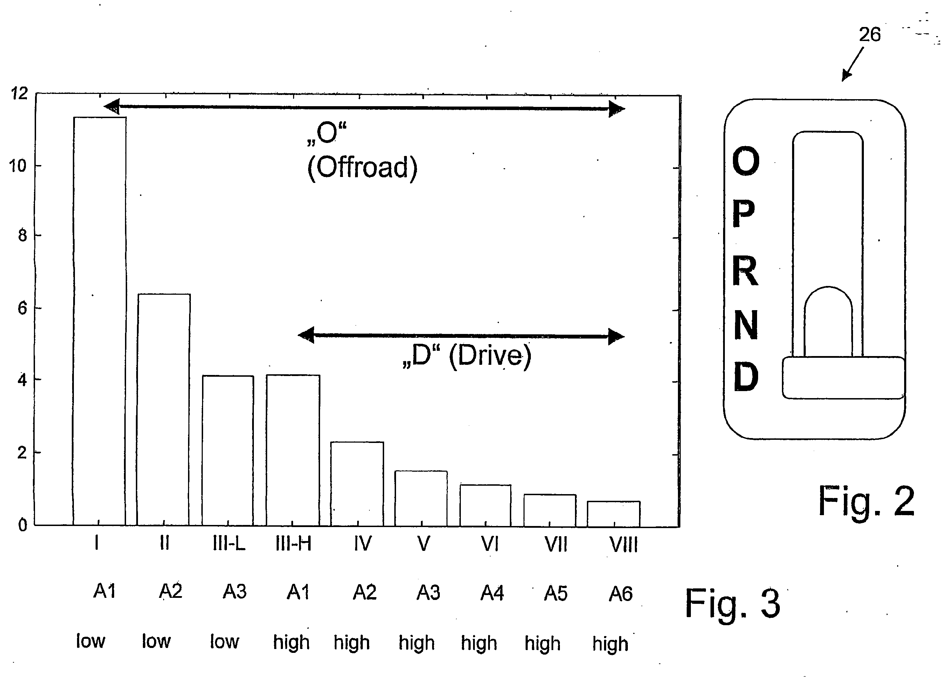

Über einen in Fig. 2 dargestellten Automatgetriebewählhebel 26 sind von einem Fahrer verschiedene Vorgaben wählbar. Dabei sind verschiedene Stellungen "O", "P", "R", "N" und "D" des Automatgetriebewählhebels 26 möglich, die durch eine Rastierung für einen Fahrer erkennbar voneinander getrennt sind. In den Positionen "O" (Offroad) und "D" (Drive) des Automatgetriebewählhebels 26 ist jeweils als Fahrrichtung "Vorwärtsfahrt" des Fahrzeuges angewählt. Die Position "P" (Parken) wird in stehendem Zustand des Fahrzeuges eingelegt, wobei der Abtrieb des Fahrzeugs blockiert ist. Die Position "R" (Rückwärts) wird zum Einlegen eines Rückwärtsganges ausgewählt und in der Position "N" (Neutral) ist der Kraftfluß des Antriebsstranges 1 von der Antriebsmaschine 2 zum Abtrieb des Fahrzeuges im Bereich des Mehrgruppengetriebes 4 unterbrochen.

Die Positionen "O" und "D" bzw. die damit verbundenen Funktionen des Automatgetriebewählhebels 26 für Vorwärtsfahrt unterscheiden sich dahingehend, daß bei ausgewählter Wählhebelposition "D" in der Rangegruppe 9 die Übersetzung "high" eingelegt wird und wie in Fig. 3 dargestellt für einen Fahrbetrieb sechs Gangstufen "III-H", "IV", "V", "VI", "VII" und "VIII" des Mehrgruppengetriebes 4 in Abhängigkeit einer Übersetzung "A1", "A2", "A3", "A4", "A5" oder "A6" des Automatgetriebes 8 zur Verfügung stehen. Die Gesamtübersetzung des Mehrgruppengetriebes 4 nimmt dann Werte in einem Bereich von z. B. 4,17 bis 0,69 an.

Eine Umschaltung zwischen den einzelnen Gangstufen "III-H", "IV", "V", "VI", "VII" und "VIII" des Mehrgruppengetriebes 4 erfolgt jeweils durch eine Änderung der Übersetzung des Automatgetriebes 8, was vorzugsweise entsprechend einem vorgegebenen oder ausgewählten Schaltprogramm erfolgt, das beispielsweise in der Steuereinrichtung des Mehrgruppengetriebes 24 oder des Automatgetriebes 8 abgelegt ist.

Wählt ein Fahrer über den Automatgetriebewählhebel 26 die Position "O" aus, können über das Mehrgruppengetriebe 4 außer den Gangstufen "III-H", "IV", "V", "VI", "VII" und "VIII" drei weitere Gangstufen "I", "II" und "III-L" dargestellt werden. Die Gangstufen "I", "II" und "III-L" stehen dann zur Verfügung, wenn in der Rangegruppe 9 die Übersetzung "low" eingestellt ist und in dem Automatgetriebe 8 jeweils eine erste Übersetzung "A1", eine zweite Übersetzung "A2" oder eine dritte Übersetzung "A3" eingelegt ist. Eine Übersetzung des Mehrgruppengetriebes 4 nimmt dann Werte zwischen z. B. 11,3 und 0,69 an.

Des weiteren wird in der Position "O" des Automatgetriebewählhebels 26 aufgrund einer Betriebsstrategie, die dem jeweils aktivierten Schaltprogramm übergeordnet ist, in einem bestimmten Betriebspunkt des Antriebsstranges automatisch eine Änderung der Übersetzung der Rangegruppe 9 von der Übersetzungsstufe "low" in die Übersetzungsstufe "high" vorgenommen. Gleichzeitig wird in dem Automatgetriebe von der Übersetzung "A3" in die Übersetzung "A1" umgeschaltet. Die Schaltvorgänge des Mehrgruppengetriebes 4 werden über eine geeignete Ansteuerung des Automatgetriebes 8 und der Rangegruppe 9 vollständig automatisiert durchgeführt, wodurch ein Fahrer eines Kraftfahrzeuges entlastet wird.

Des weiteren erfolgt die Auswahl der Übersetzung "low" bzw. "high" der Rangegruppe 9 durch die vorgenannte übergeordnete Betriebsstrategie derart, daß "unsinnige" Übersetzungskombinationen des Automatgetriebes 8 und der Rangegruppe 9 verhindert werden.

Unter "unsinnigen" Übersetzungskombinationen sind Kombinationen der Einzelübersetzungen des Automatgetriebes 8 und der Rangegruppe 9 zu verstehen, bei welchen sehr hohe Drehzahlunterschiede zwischen dem Automatgetriebe 8 und der Rangegruppe 9 vorliegen. Dies ist beispielsweise dann der Fall, wenn in der Rangegruppe 9 die Übersetzung "low" eingelegt ist und im Automatgetriebe 8 die Übersetzung "A5" eingelegt werden muß, um eine vom Schaltprogramm angeforderte Übersetzung des Mehrgruppengetriebes 4 einzustellen.

Da bei einer Kombination einer "kleinen" Übersetzung des Automatgetriebes 8 mit der Übersetzung "low" der Rangegruppe 9 in letzterer sehr hohe Eingangsdrehzahlen auftreten, die einen niedrigen Wirkungsgrad des Mehrgruppengetriebes 4 bewirken, wird zur Darstellung einer jeweilig angeforderten Übersetzung des Mehrgruppengetriebes 4 die Übersetzung in der Rangegruppe 9 von "low" nach "high" geändert und im Automatgetriebe automatisch eine "größere" Übersetzung zur Darstellung der angeforderten Übersetzung des Mehrgruppengetriebes 4 eingelegt. Dann ist die Eingangsdrehzahl der Rangegruppe 9 reduziert und die Rangegruppe 9 wird in "high" betrieben, womit der Wirkungsgrad des Mehrgruppengetriebes 4 deutlich verbessert wird. Dies führt wiederum zu einer reduzierten Wärmeentwicklung in der Rangegruppe 9 sowie zu einer Senkung des Kraftstoffverbrauches des Fahrzeugs bzw. der Antriebsmaschine 2.

Um eine Umschaltung bzw. Änderung der Übersetzung der Rangegruppe 9 mit einer möglichst geringen Zugkraftunterbrechungszeit durchführen zu können, wird die Änderung während ganz bestimmter Betriebszustände des Mehrgruppengetriebes 4 bzw. des Antriebsstranges 1 vorgenommen.

Fig. 3 zeigt ein Balkendiagramm, wobei eine Höhe der Balken jeweils einen quantitativen Wert der Übersetzung des Mehrgruppengetriebes 4 angibt. Die Übersetzung des Mehrgruppengetriebes 4 ergibt sich jeweils durch die Kombination der Übersetzung des Automatgetriebes 8 und der Übersetzung der Rangegruppe 9 und entspricht jeweils einer der verschiedenen Gangstufen "I", "II", "III-L", "III-H", "IV", "V", "VI", "VII" und "VIII" des Mehrgruppengetriebes 4.

Dabei ist signifikant, daß die Übersetzungen der Gangstufen "III-L" und "III-H" des Mehrgruppengetriebes 4 durch eine geeignete Stufung des Automatgetriebes 8 und der Rangegruppe 9 in etwa gleich sind. Die beiden Gangstufen "III-L" und "III-H" des Mehrgruppengetriebes 4 werden ebenso wie alle anderen Gangstufen des Mehrgruppengetriebes 4 durch eine bestimmte Kombination der Übersetzungen des Automatgetriebes 4 und der Rangegruppe 9 eingestellt. Bei der Gangstufe "III-L" des Mehrgruppengetriebes 4 ist im Automatgetriebe 8 die Übersetzung "A3" und in der Rangegruppe 9 gleichzeitig die Übersetzung "low" eingelegt. Im Unterschied dazu ist bei der Gangstufe "III-H" des Mehrgruppengetriebes 4 in dem Automatgetriebe 8 die Übersetzung "A1" und in der Rangegruppe 9 die Übersetzung "high" eingelegt.

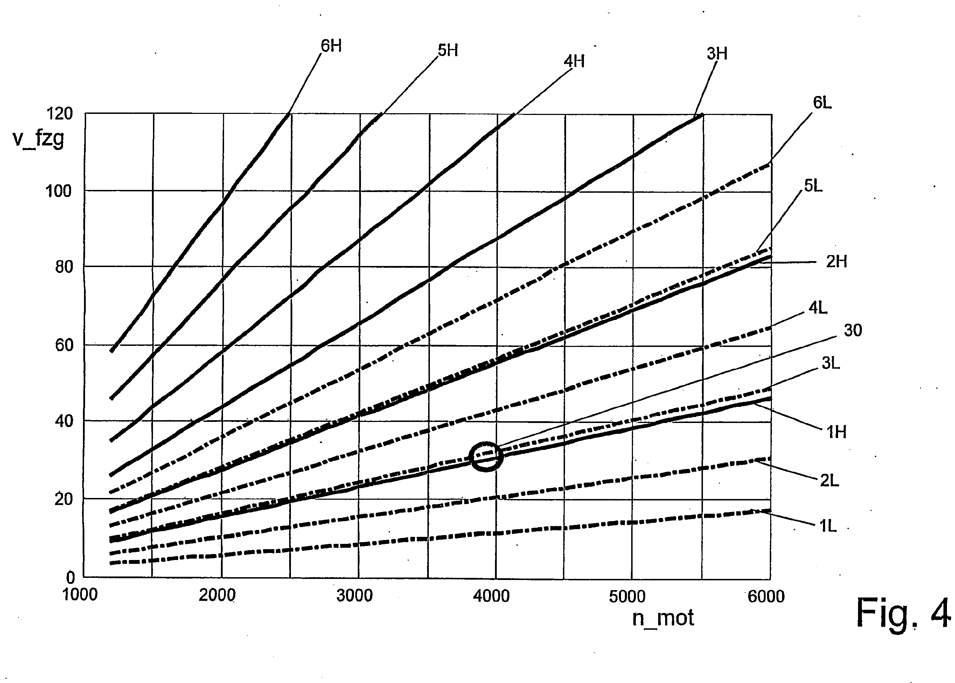

Bei angewählter Position "O" des Automatgetriebewählhebels 26 wird bei Vorliegen eines bestimmten BetriebszuStandes in der Rangegruppe 9 von der Übersetzung "low" nach "high" oder in die entgegengesetzte Richtung geschaltet. Dieser Betriebszustand ist in Fig. 4 beispielhaft mit einem Kreis 30 gekennzeichnet.

Dadurch, daß die Übersetzung des Mehrgruppengetriebes 4 in den Gangstufen "III-L" und "III-H" nahezu gleich ist, sind die Verläufe einer Fahrzeuggeschwindigkeit v_fzg, die in Fig. 4 über der Drehzahl n_mot der Antriebsmaschine 2 aufgetragen sind, fast identisch. Eine Drehzahl n_mot der Antriebsmaschine 2 der Gangstufe "III-L" entspricht bei einer bestimmten Fahrzeuggeschwindigkeit v_fzg in etwa der Drehzahl n_mot der Antriebsmaschine 2 der Gangstufe "III-H" oder umgekehrt.

Wird in diesem Betriebszustand des Antriebsstranges 1 die Übersetzung in der Rangegruppe 9 von "low" nach "high" geändert, kann die Übersetzungsänderung mit einer sehr kurzen Zugkraftunterbrechungszeit durchgeführt werden, da die Drehzahl n_mot der Antriebsmaschine 2 während des Wechsels der Übersetzung in der Rangegruppe 9 nahezu gleich bleibt und nur getriebeinterne Drehmassen des Mehrgruppengetriebes 4 miteinander synchronisiert werden müssen.

Fig. 4 zeigt ein Drehzahl-Geschwindigkeits-Diagramm, wobei die dargestellten Linien jeweils die Verläufe der Fahrzeuggeschwindigkeit v_fzg über der Drehzahl n_mot der Antriebsmaschine 2 der verschiedenen Übersetzungen des Mehrgruppengetriebes 4 wiedergeben. Die Übersetzungen des Mehrgruppengetriebes 4 werden jeweils aus der Kombination der Übersetzung des Automatgetriebes 8 und der die zwei Übersetzungsstufen aufweisenden Rangegruppe 9 gebildet.

Die einzelnen Verläufe sind jeweils durch den Buchstaben "A" und einer der Ziffern "1" bis "6" gekennzeichnet, welche zusammen die im Automatgetriebe 8 eingelegte Übersetzung angeben. Darüber hinaus folgt der Ziffer entweder der Buchstabe "H" oder der Buchstabe "L", wobei der Buchstabe "L" die Übersetzung "low" bzw. der Buchstabe "H" die Übersetzung "high" der Rangegruppe 9 repräsentiert.

So ergibt sich beispielsweise aus der Bezeichnung "A2H", daß sich der damit gekennzeichnete Verlauf der Fahrzeuggeschwindigkeit v_fzg bei einer Übersetzung des Mehrgruppengetriebes 4 einstellt, die sich aus der Kombination der zweiten Übersetzung "A2" des Automatgetriebes 8 und der Übersetzung "high" der Rangegruppe 9 ergibt und der Gangstufe "IV" des Mehrgruppengetriebes 4 entspricht.

Aus dem Drehzahl-Geschwindigkeits-Diagramm gemäß Fig. 4 ergibt sich, daß die Verläufe der Fahrzeuggeschwindigkeit v_fzg über der Drehzahl n_mot der Antriebsmaschine 2 dann nahezu identisch sind, wenn im Automatgetriebe die Übersetzung "A3" und gleichzeitig in der Rangegruppe die Übersetzungsstufe "low" eingelegt ist oder wenn in dem Automatgetriebe 8 die Übersetzung "A1" eingelegt ist und in der Rangegruppe 9 gleichzeitig die Übersetzungsstufe "high" geschaltet ist.

Mit dieser Kenntnis zeigt sich in Zusammenhang mit der Darstellung in Fig. 3, daß der Wechsel der Übersetzungsstufe in der Rangegruppe von "low" nach "high" oder von "high" nach "low" dann besonders günstig ist, wenn gleichzeitig in dem Automatgetriebe die Übersetzung ausgehend von der Übersetzung "A3" in die Übersetzung "A1" oder umgekehrt vorgenommen wird. Die Übersetzung des Mehrgruppengetriebes 4 bleibt dabei im wesentlichen gleich, weshalb eine Anschlußdrehzahl der Drehzahl der Antriebsmaschine 2 der angestrebten Übersetzung des Mehrgruppengetriebes 4, bei der die Rangegruppe 9 synchronisiert ist, im wesentlichen gleich der Drehzahl der Antriebsmaschine 2 der aktuell eingelegten Übersetzung des Mehrgruppengetriebes ist.

Das bedeutet, daß beim Umschalten der Übersetzung der Rangegruppe 9 eine Anpassung der Drehzahl der Antriebsmaschine 2 unterbleibt und eine Synchronisierung der zuzuschaltenden Schaltelemente der Rangegruppe 9 und auch der zuzuschaltenden Schaltelemente des Automatgetriebes 8 unabhängig von der Drehzahl der Antriebsmaschine in sehr kurzer Zeit, vorzugsweise in einem Bereich von 0,1 bis 0,2, insbesondere in etwa 0,15 Sekunden, durchgeführt werden kann.

Dies stellt eine erhebliche Verkürzung der Zugkraftunterbrechungszeit im Vergleich zu herkömmlichen aus der Praxis bekannten Schaltstrategien dar, mit welchen lediglich Schaltzeiten von einer halben Sekunde bis hin zu einer Sekunde realisiert werden können, was jedoch eine erhebliche Zugkraftunterbrechung bedeutet.

Die Verläufe "A5L" und "A2H" des Drehzahl-Geschwindigkeits-Diagramms gemäß Fig. 4 weisen ebenfalls einen nahezu identischen Verlauf auf. Die Übersetzungskombination aus der Übersetzung "A5" des Automatgetriebes 8 und der Übersetzung "low" der Rangegruppe 9 zur Darstellung der Übersetzung des Mehrgruppengetriebes 4 wird jedoch aufgrund der vorgenannten negativen Auswirkungen durch die in der Steuereinrichtung abgelegte und die dem jeweilig aktivierten Schaltprogramm übergeordnete Betriebsstrategie nicht ausgewählt.

Es liegt selbstverständlich im Ermessen des Fachmannes, eine Änderung der Übersetzung in der Rangegruppe 9 in Abhängigkeit des jeweilig vorliegenden Anwendungsfalles derart auszuführen, daß der Wechsel zwischen der Übersetzungsstufe "low" und der Übersetzungsstufe "high" der Rangegruppe 9 speziell dann durchgeführt wird, wenn in dem Automatgetriebe 8 die Übersetzung "A5" oder die Übersetzung "A2" eingelegt ist und entsprechend der Übersetzungsänderung in der Rangegruppe 9 im Automatgetriebe 8 von der Übersetzung "A2" in Richtung der Übersetzung "A5" oder umgekehrt entgegengeschaltet wird.

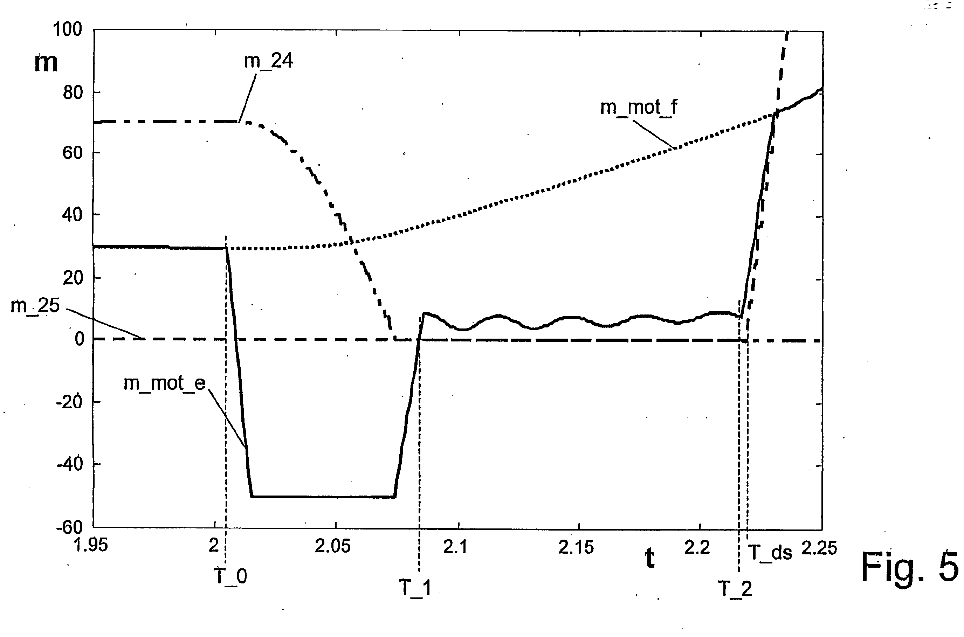

In Fig. 5 sind mehrere Drehmomentverläufe über einer Schaltzeit t während einer Änderung der Übersetzung der Rangegruppe 9 von "low" nach "high" dargestellt. Dabei repräsentiert ein Verlauf m_24 den Verlauf des an dem ersten Schaltelement 24 der Rangegruppe 9 anliegenden Drehmomentes während der Schaltung in der Rangegruppe 9. Ein Verlauf m_25 stellt das an dem zweiten Schaltelement 25 der Rangegruppe 9 anliegende Drehmoment während der Änderung der Übersetzung der Rangegruppe 9 von der Übersetzungsstufe "low" zu der Übersetzungsstufe "high" dar.

Damit korrespondiert ein Verlauf m_mot_e der Antriebsmaschine 2, welcher eine vorgabe der Steuereinrichtung darstellt und als sogenanntes E-Gas-Moment bezeichnet wird. Das E-Gas-Moment m_mot_e ist das während der Schaltung antriebsmaschinenseitig an dem Mehrgruppengetriebe 4 anliegende Antriebsmoment der Antriebsmaschine, welches von der Steuereinrichtung eingestellt wird. Zusätzlich ist ein Verlauf m_mot_f dargestellt, welcher den Verlauf eines von einem Fahrer angeforderten Antriebsmoments der Antriebsmaschine 2 darstellt, das während der Übersetzungsänderung in der Rangegruppe 9 jedoch nicht berücksichtigt wird.

Wird in Abhängigkeit der in der Steuereinrichtung abgelegten übergeordneten Betriebsstrategie ein Signal ausgegeben, das in der Rangegruppe 9 von der Übersetzungsstufe "low" in die Übersetzungsstufe "high" geschaltet werden soll, wird das Antriebsmoment der Antriebsmaschine 2 entsprechend dem Verlauf m_mot_e des E-Gas-Momentes zur Entlastung des Antriebsstranges 1 solange verändert, bis das als Klauenkupplung ausgeführte erste Schaltelement 24 entsprechend dem Verlauf m_24 vollständig entlastet ist.

Anschließend wird das E-Gas-Moment m_mot_e, welches bis zur vollständigen Entlastung des ersten Schaltelementes 24 konstant gehalten wird, in Richtung eines positiven Wertes verändert. Daran anschließend wird das E-Gas-Moment m_mot_e bis zum endgültigen Durchschalten des ebenfalls als Klauenkupplung ausgeführten zweiten Schaltelementes 25 der Rangegruppe 9 auf einen gewissen Wert geregelt, wodurch eine Synchronisierung des zweiten Schaltelementes 25 unterstützt wird.

Ab einem Zeitpunkt T_ds, d. h. dem Durchschaltzeitpunkt des zweiten Schaltelementes 25, steigt das Drehmoment bzw. der Verlauf m_25 des Drehmomentes des zweiten Schaltelementes 25 sprungartig an, wodurch der Kraftfluß zwischen der Antriebsmaschine 2 und dem Abtrieb des Kraftfahrzeuges hergestellt ist. Gleichzeitig erfolgt eine Anpassung des E-Gas-Momentes m_mot_e an das Fahrermoment m_mot_f, wodurch der Umschaltvorgang bzw. die Änderung der Übersetzung in der Rangegruppe 9 beendet ist.

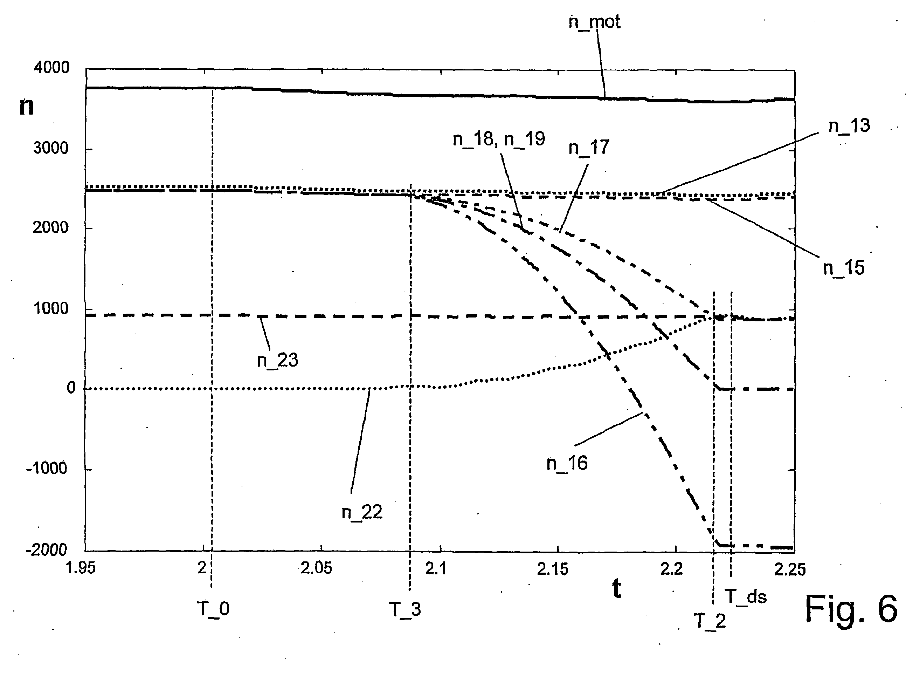

Das in Fig. 6 dargestellte Diagramm, welches mehrere Drehzahlverläufe verschiedener Bauelemente des Antriebsstranges 1 gemäß Fig. 1 während einer Schaltung in der Rangegruppe 9 und dem Automatgetriebe 8 zeigt, stellt die Synchronisierung der Rangegruppe 9 über das Automatgetriebe bzw. dessen Schaltelemente A bis E näher dar. Dabei sind die Drehzahlen n über der Schaltzeit t aufgetragen.

Die verschiedenen Drehzahlverläufe der einzelnen Bauteile des Antriebsstranges 1 sind jeweils durch den Buchstaben n und die Bezugszeichen der Bauteile des Antriebsstranges 1 aus Fig. 1 näher gekennzeichnet. So stellt beispielsweise der Verlauf n_13 den Drehzahlverlauf des Planetenträgers 13 des ersten Planetenradsatzes 10 dar.

Zum Zeitpunkt T_0, an welchem die Schaltphase zur Änderung der Übersetzung der Rangegruppe 9 beginnt, wird das E-Gas-Moment m_mot_e entsprechend dem in Fig. 5 dargestelltten Verlauf verändert. Diese von der Steuereinrichtung eingeleitete Maßnahme hat zunächst keinen Einfluß auf die in Fig. 6 dargestellten Drehzahlverläufe n_13, n_15, n_16, n_17, n_18, n_19, n_22, n_23 und den Verlauf der Antriebsdrehzahl n_mot der Antriebsmaschine 2. Mit zunehmender Schaltzeit t wird das Drehmoment m_24 des ersten Schaltelementes 24 der Rangegruppe 9 bis auf Null abgesenkt und das erste Schaltelement 24 der Rangegruppe 9 geöffnet.

Das bedeutet, daß das Hohlrad 23 der Rangegruppe 9 von dem Getriebegehäuse 20A der Rangegruppe 9 gelöst wird und drehbar wird. Ab diesem Zeitpunkt steigt der Drehzahlverlauf n_22 des Hohlrades 22 der Rangegruppe 9 langsam in Richtung der Drehzahl n_23 des Planetenträgers 23 der Rangegruppe 9 an.

Ab einem Zeitpunkt T_3 wird eine Übertragungsfähigkeit zuzuschaltender und abzuschaltender Schaltelemente des Automatgetriebes 8 derart eingestellt, daß die Drehzahl n_16 des zweiten Sonnenrades 16 des zweiten Planetenradsatzes 14, die Drehzahl n_17 des gemeinsamen Hohlrades 17 des zweiten Planetenradsatzes 14, die Drehzahl n_18 des ersten Planetenträgers 18 des zweiten Planetenradsatzes 14 und die Drehzahl n_19 des zweiten Planetenträgers 19 des zweiten Planetenradsatzes 14 reduziert werden. Die Drehzahl n_13 des Planetenträgers 13 des ersten Planetenradsatzes 10, die Drehzahl n_15 des ersten Sonnenrades des zweiten Planetenradsatzes 14 und die Antriebsdrehzahl n_mot der Antriebsmaschine 2 bleiben dabei im wesentlichen nahezu unverändert.

Die Einstellung der Übertragungsfähigkeit der Schaltelemente des Automatgetriebes bewirkt in Kombination mit der Vorgabe des E-Gas-Momentes m_mot_e eine Angleichung der Drehzahl n_22 des Hohlrades 22 der Rangegruppe 9 an die Drehzahl n_23, bis die Drehzahlen n_22 und n_23 identisch sind. In diesem Punkt ist das zweite Schaltelement 25 der Rangegruppe 9 synchronisiert und kann eingerückt bzw. geschlossen werden. Dieser Punkt ist durch den Zeitpunkt T_2 in Fig. 6 näher gekennzeichnet.

Zum Zeitpunkt T_ds wird von einem Positionssensor das Einrücken des zweiten Schaltelementes 25 der Rangegruppe 9 erkannt und das E-Gas-Moment m_mot_e dem Fahrermoment m_mot_f angeglichen.

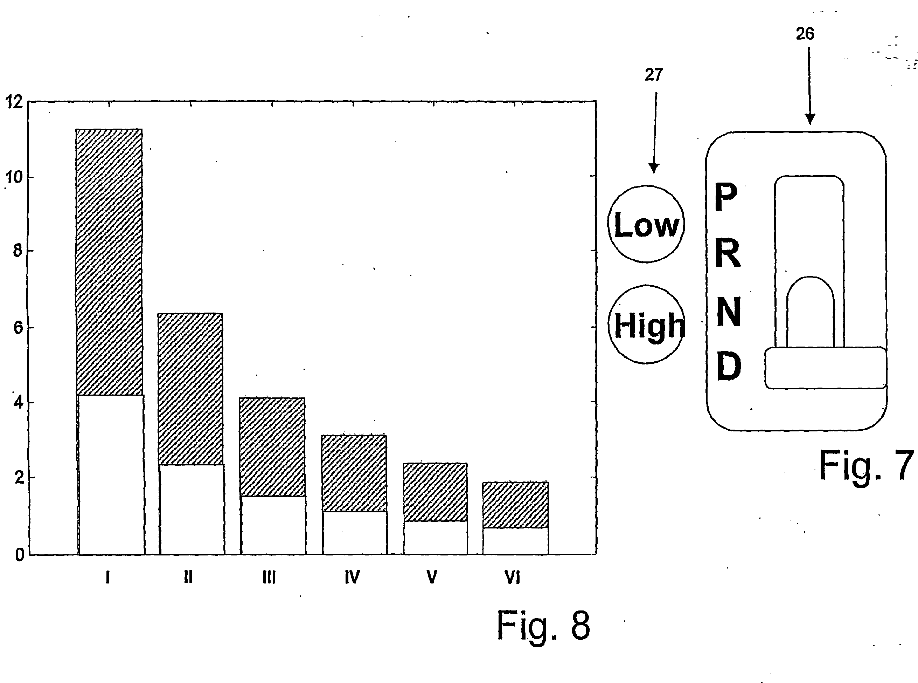

Die Darstellungen der Fig. 7 bis Fig. 11 entsprechen jeweils im wesentlichen den Darstellungen der Fig. 2 bis Fig. 6. Anhand der Fig. 7 bis Fig. 11 wird nachfolgend das Verhalten einzelner Betriebsparameter des Antriebsstranges 1 gemäß Fig. 1 während der Änderung der Übersetzungen des Automatgetriebes 8 und der Rangegruppe 9 beschrieben, wobei eine Ansteuerung des Antriebsstranges 1 entsprechend einer Ausführung des Verfahrens nach der Erfindung erfolgt, welche alternativ zu der bezüglich Fig. 2 bis Fig. 6 beschriebenen Ausführung ist. In der Beschreibung zu Fig. 7 bis Fig. 11 werden für bau- und funktionsgleiche Bauteile der Übersichtlichkeit halber dieselben Bezugszeichen wie bei der Beschreibung zu Fig. 1 bis Fig. 6 verwendet.

Fig. 7 zeigt einen Automatgetriebewählhebel 26 mit den Wählhebelpositionen "D", "N", "R" und "P". Mit dem Automatgetriebewählhebel 26 ist ein Auswahlschalter 27 zur fahrerseitigen Vorgabe der Übersetzungsstufen "low" und "high" in der Rangegruppe 9 kombiniert. Der Auswahlschalter 27 ist mit der Steuereinrichtung des Antriebsstranges 1 derart gekoppelt, daß bei einer Fahrerwunschvorgabe über den Auswahlschalter 27 die jeweils angeforderte Übersetzungsstufe "low" oder "high" in der Rangegruppe 9 eingelegt wird.

In Abhängigkeit der jeweils in der Rangegruppe 9 eingelegten Übersetzung weisen die einzelnen Gangstufen "I", "II", "III", "IV", "V" und "VI" des Mehrgruppengetriebes 4 die in Fig. 8 in einem Balkendiagramm dargestellten Übersetzungen auf. Die gesamte Höhe eines Balkens entspricht jeweils einer Übersetzung der einzelnen Gangstufen "I", "II", "III", "IV", "V" und "VI" des Mehrgruppengetriebes 4, wenn in der Rangegruppe 9 die Übersetzung "low" eingelegt ist. Die einzelnen Gangstufen "I", "II", "III", "IV", "V" und "VI" des Mehrgruppengetriebes 4 werden jeweils durch eine entsprechende Änderung der Übersetzung des Automatgetriebes eingestellt, wobei die jeweilige Übersetzung der Gangstufen "I", "II", "III", "IV", "V" und "VI" des Mehrgruppengetriebes von der in der Rangegruppe eingelegten Übersetzung abhängt.

Ist in der Rangegruppe 9 die Übersetzungsstufe "low" eingelegt, ergeben sich für die einzelnen Gangstufen "I", "II", "III", "IV", "V" und "VI" des Mehrgruppengetriebes 4 die durch die schraffierten Balken wiedergegeben Übersetzungswerte. Das heißt, daß das Mehrgruppengetriebe 4 in der Übersetzungsstufe "low" der Rangegruppe 9 sechs Gänge aufweist, deren Übersetzungen Werte zwischen z. B. 11,3 und 1,87 annehmen. Ist in der Rangegruppe 9 die Übersetzung "high" eingelegt, weist das Mehrgruppengetriebe 4 ebenfalls sechs Gänge auf, deren Übersetzungen Werte zwischen z. B. 4,17 und 0,69 annehmen.

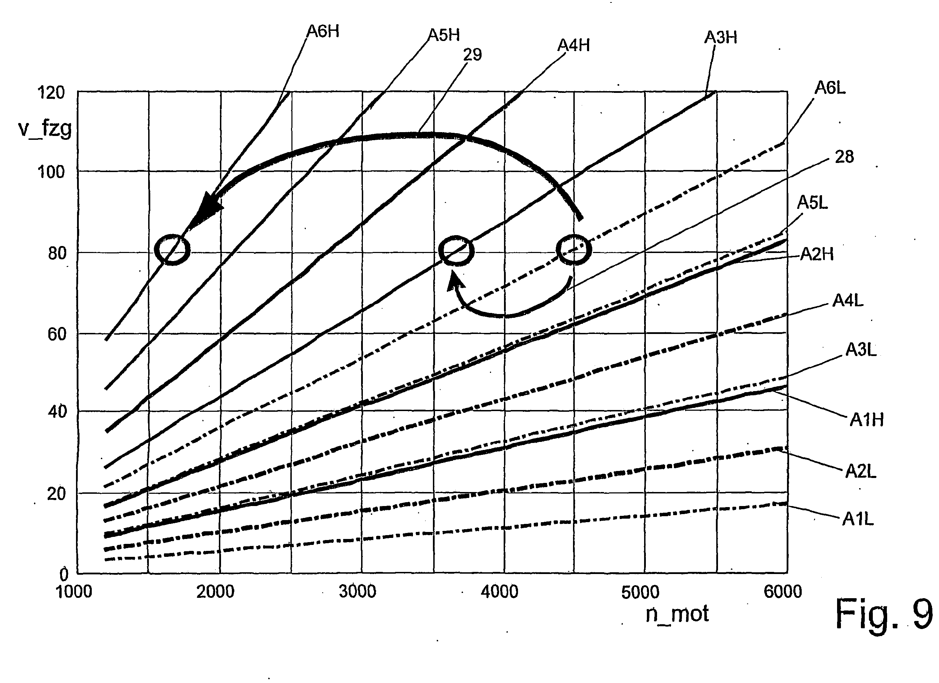

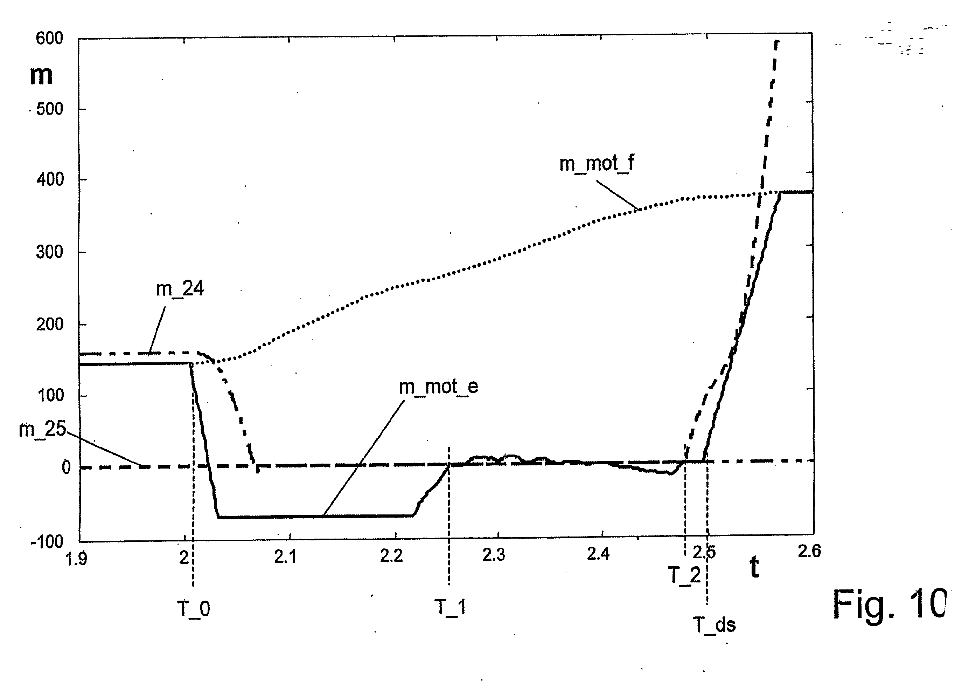

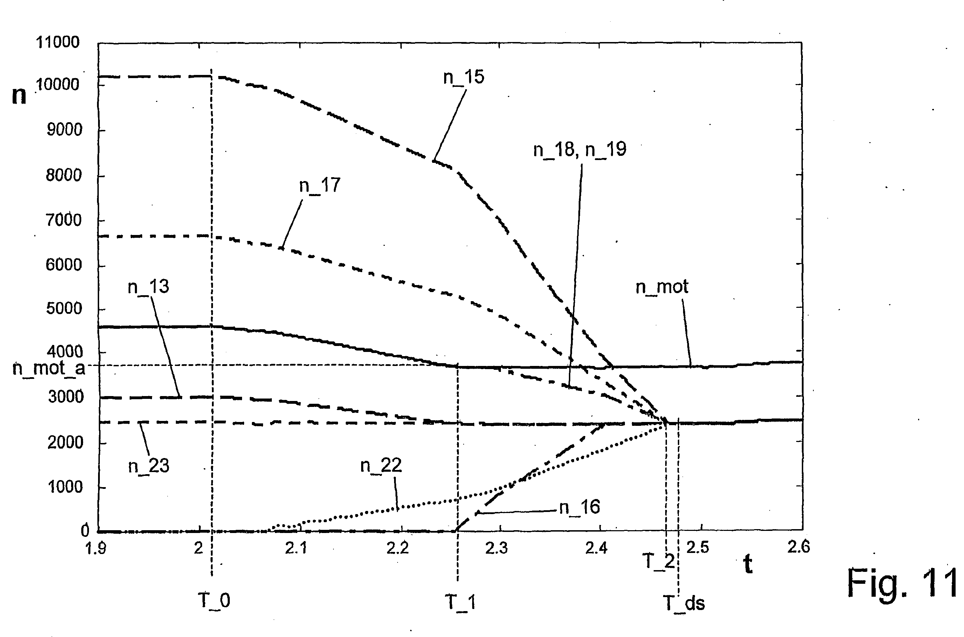

Fig. 9 zeigt ein Drehzahl-Geschwindigkeits-Diagramm, welches prinzipmäßig dem Diagramm gemäß Fig. 4 entspricht. Des weiteren sind in Fig. 10 mehrere Momentenverläufe dargestellt, welche sich an verschiedenen Bauteilen des Antriebsstranges 1 während einer Änderung der Übersetzung in der Rangegruppe 9 von der Übersetzungsstufe "low" zu der Übersetzungsstufe "high" einstellen. Zusätzlich sind in Fig. 11 mehrere Drehzahlverläufe einzelner Bauteile des Antriebsstranges 1 gemäß Fig. 1 während der Übersetzungsänderung in der Rangegruppe 9 über der Schaltzeit t aufgetragen.

Nachfolgend wird anhand der in Fig. 9 bis Fig. 11 dargestellten Diagramme ein Verfahren zum Steuern des Antriebsstranges 1 beschrieben, mittels welchem eine Änderung der Übersetzung der Rangegruppe 9 von der Übersetzungsstufe "low" in die Übersetzungsstufe "high" bei beliebiger Fahrzeuggeschwindigkeit mit sehr kurzen Zugkraftunterbrechungszeiten durchführbar ist.

Bezug nehmend auf Fig. 9 wählt der Fahrer des Fahrzeuges zu einem Zeitpunkt T_0 an dem Auswahlschalter 27 die Übersetzungsstufe "high" in der Rangegruppe 9 aus, in welcher zu diesem Zeitpunkt die Übersetzungsstufe "low" eingelegt ist. Wählt der Fahrer die Übersetzung "low" aus, wenn diese in der Rangegruppe 9 bereits eingelegt ist, wird die Fahrerwunschvorgabe in der Steuereinrichtung des Antriebsstranges 1 ignoriert.

Mit Eingang der Fahrerwunschvorgabe in der Steuereinrichtung des Antriebsstranges 1 wird von der Steuereinrichtung das Antriebsmoment der Antriebsmaschine 2 reduziert, was durch den Verlauf des E-Gas-Momentes m_mot_e in Fig. 10 grafisch wiedergegeben ist.

Durch die Reduzierung des Antriebsmomentes der Antriebsmaschine 2 wird der Antriebsstrang 1 entlastet, wodurch gleichzeitig das an dem ersten Schaltelement 24 der Rangegruppe 9 anliegende Drehmoment m_24 gegen Null geht. Ist das erste Schaltelement 24 der Rangegruppe 9 vollständig entlastet, wird das erste Schaltelement 24 ausgerückt, wodurch in der Rangegruppe 9 der Neutralzustand eingestellt ist. Das als Klauenkupplung ausgeführte erste Schaltelement 24 wird über einen in der Rangegruppe 9 angeordneten Elektromotor geöffnet. Über einen nicht näher dargestellten Positionssensor wird der geöffnete Zustand des ersten Schaltelementes 24 festgestellt. Ein Signal des Positionssensors wird in der Steuereinrichtung verarbeitet, und zuzuschaltende Schaltelemente des Automatgetriebes 8, welche einer der Schaltung in der Rangegruppe entsprechenden Gegenschaltung in dem Automatgetriebe beteiligt sind, werden von der Steuereinrichtung angesteuert.

Die Vorteile des Vorgehens, daß mit der Änderung der Übersetzung der Rangegruppe 9 eine entsprechende Gegenschaltung im Automatgetriebe 8 erfolgt, ohne daß eine Fahrzeuggeschwindigkeit v_fzg verändert wird, sind in Fig. 8 durch die Pfeile 28 und 29 verdeutlicht. Erfolgt bei einer Änderung der Übersetzung der Rangegruppe 9 von "low" nach "high" bei in dem Automatgetriebe 8 eingelegter Übersetzung "A6" eine Gegenschaltung in dem Automatgetriebe 8 in die Übersetzung "A3", weicht eine Anschlußdrehzahl der Antriebsmaschine 2 des neuen Ganges des Mehrgruppengetriebes erheblich weniger von der Drehzahl n_mot der Antriebsmaschine bei der Ausgangsübersetzung "A6L" des Mehrgruppengetriebes 4 ab, als dies ohne Gegenschaltung im Automatgetriebe 8 der Fall ist.

Die Anschlußdrehzahl n_mot der Antriebsmaschine 2, welche sich ohne entsprechende Gegenschaltung im Automatgetriebe 8 einstellen würde, ist durch den weiteren Pfeil 29 in Fig. 8 dargestellt. Dieser große Drehzahlsprung ist für das Fahrverhalten nachteilig, da eine Ausgleichszeit, während der die Drehzahl der Antriebsmaschine auf die neue Drehzahl bzw. die Anschlußdrehzahl eingestellt wird, viel länger ist als bei geringeren Drehzahldifferenzen. Der Nachteil ergibt sich aus der Tatsache, daß der Antriebsstrang während der Ausgleichszeit entlastet ist und die Schaltung eine Zugkraftunterbrechung verursacht, die unter Umständen eine Weiterfahrt an großen Steigungen unmöglich macht.

Nach der Entlastung des Antriebsstranges 1 und somit des ersten Schaltelementes 24 der Rangegruppe 9 wird das Drehmoment der Antriebsmaschine bzw. das E-Gas-Moment m_mot_e konstant gehalten und in einer anschließenden Regelungsphase in der in Fig. 10 schematisch dargestellten Art und Weise derart eingestellt, daß in Abhängigkeit des Drehmomentes m_mot der Antriebsmaschine und auch der Drehzahl n_mot der Antriebsmaschine 2 eine Synchronisierung des zweiten Schaltelementes 25 der Rangegruppe 9 sowie der zur Einstellung der neuen Übersetzung des Automatgetriebes 8 zuzuschaltenden Schaltelemente des Automatgetriebes 8 erfolgt.

Mit den Drehmomentverläufen aus Fig. 10 korrespondieren Drehzahlverläufe der einzelnen Bauelemente des Antriebsstranges 1, die in Fig. 11 dargestellt sind. Zu einem Zeitpunkt T_0, an welchem die Fahrerwunschvorgabe zur Änderung der Übersetzung in der Rangegruppe 9 von der Übersetzung "low" zu der Übersetzung "high" über den Auswahlschalter 27 erfolgt, beginnt die Schaltung in dem Mehrgruppengetriebe entsprechend der Fahrerwunschvorgabe, die eine Änderung der Drehzahlen bzw. eine Änderung der Verläufe der einzelnen Drehzahlen der an der Schaltung beteiligten Bauelemente des Antriebsstranges bewirkt.

Um die Antriebsdrehzahl n_mot der Antriebsmaschine 2 in einer möglichst kurzen Zeit von der Drehzahl des zum Zeitpunkt T_0 der Fahrerwunschvorgabe vorliegenden Ganges des Mehrgruppengetriebes 4 auf die Anschlußdrehzahl des einzustellenden Ganges des Mehrgruppengetriebes 4 zu führen, wird eine Übertragungsfähigkeit der zuzuschaltenden und der abzuschaltenden Schaltelemente des Automatgetriebes 8 jeweils derart eingestellt, daß die Drehzahl n_mot der Antriebsmaschine 2 den in Fig. 11 dargestellten Verlauf aufweist.

Zum Zeitpunkt T_1 hat die Drehzahl n_mot der Antriebsmaschine 2 die Anschlußdrehzahl n_mot_a erreicht, welche zuvor in der Steuereinrichtung in Abhängigkeit der "neuen" Übersetzung des Mehrgruppengetriebes 4 und der aktuellen Fahrzeuggeschwindigkeit v_fzg berechnet wird. Dabei wird die Fahrzeuggeschwindigkeit v_fzg durch im Fahrzeug vorhandene und nicht näher dargestellte ABS-Sensoren oder anderen geeigneten Einrichtungen des Fahrzeugs bestimmt.

Die Antriebsdrehzahl n_mot der Antriebsmaschine 2 ist mit der vorbeschriebenen Vorgehensweise wesentlich schneller auf die Anschlußdrehzahl n_mot_a bringbar, als dies über eine alleinige Einstellung über das E-Gas-Moment der Fall ist. So wird die Antriebsmaschine 2 im vorliegenden Fall vorzugsweise über eine Erhöhung der Übertragungsfähigkeit der zuzuschaltenden Schaltelemente des Automatgetriebes 9 abgebremst. Die zuzuschaltenden Schaltelemente des Automatgetriebes 8 werden in einer sogenannten Schlupfphase betrieben und bremsen die Antriebsmaschine 2 auf die entsprechende Anschlußdrehzahl der Antriebsmaschine in kürzester Zeit ab. Die Ansteuerung der zuzuschaltenden Schaltelemente des Automatgetriebes erfolgt derart, daß über eine gesteuerte Befüllung der reibschlüssigen Schaltelemente eine Übertragungsfähigkeit in der erforderlichen Höhe vorliegt.

Zum Zeitpunkt T_2 sind die zuzuschaltenden Schaltelemente des Automatgetriebes 8 und das zweite Schaltelement 25 der Rangegruppe 9 synchron, so daß die zuzuzchaltenden Schaltelemente des Automatgetriebes 8 sowie das zweite Schaltelement 25 geschlossen werden können und der Kraftfluß von der Antriebsmaschine 2 zum Abtrieb des Fahrzeuges wiederhergestellt ist. Gleichzeitig werden die abzuschaltenden Schaltelemente des Automatgetriebes 8 geöffnet und aus dem Kraftfluß des Antriebsstranges 1 genommen.

Über einen weiteren Positionssensor wird das Durchschalten des als Klauenkupplung ausgeführten zweiten Schaltelementes 25 erkannt und das Antriebsmoment der Antriebsmaschine 2, d.h. das E-Gas-Moment m_mot_e, dem angeforderten Antriebsmoment m_mot_f angeglichen, und die Weiterfahrt wird mit entsprechender Antriebsdrehzahl und dem angeforderten Antriebsmoment der Antriebsmaschine 2 durchgeführt.

Der vorbeschriebenen Synchronisierung der an der Schaltung des,Mehrgruppengetriebes 4 beteiligten Schaltelemente des Automatgetriebes 8 und der Rangegruppe 9 liegen die in Fig. 11 dargestellten Drehzahlverläufe n_13, n_15, n_16, n_17, n_18, n_19, n_22 und n_23 zugrunde. Der Zeitpunkt T_0 stellt den Beginn der Schaltphase in dem Mehrgruppengetriebe 4 dar. Hierbei wird die Schaltung im Gegensatz zu der Beschreibung zu Fig. 6 nicht automatisiert geschaltet, sondern erfolgt in Abhängigkeit einer Fahrerwunschvorgabe. Mit der Generierung der Fahrerwunschvorgabe zum Einlegen der Übersetzung "low" in der Rangegruppe 9 wird eine Übertragungsfähigkeit der Schaltelemente des Automatgetriebes derart eingestellt, daß die Drehzahlen n_13, n_15, n_18, n_19 und die Antriebsdrehzahl n_mot reduziert werden. Die Drehzahl n_23 des Planetenträgers 23 der Rangegruppe 9 bleibt dabei im wesentlichen unverändert.

Die in Fig. 10 dargestellte Reduzierung des Antriebsmomentes n_mot über die Reduzierung des E-Gas-Momentes m_mot_e führt zu einer Entlastung des ersten Schaltelementes 24 der Rangegruppe 9, so daß dieses kurz nach dem Zeitpunkt T_0 geöffnet werden kann und die Drehzahl n_22 des Hohlrades 22 der Rangegruppe 9 mit zunehmender Schaltzeit t langsam in Richtung der Drehzahl n_23 des Planetenträgers 23 der Rangegruppe 9 ansteigt.

Ab dem Zeitpunkt T_1, an welchem die Antriebsdrehzahl n_mot der Antriebsmaschine 2 die Anschlußdrehzahl n_mot_a erreicht hat, wird die Übertragungsfähigkeit der Schaltelemente des Automatgetriebes 8 derart eingestellt, daß die Drehzahlen n_15, n_17, n_18, n_19 weiter reduziert werden und die Drehzahl n_16 des zweiten Sonnenrades 16 des zweiten Planetenradsatzes 14 in Richtung der Drehzahl n_23 des Planetenträgers 23 der Rangegruppe 9 ansteigt.

Zum Zeitpunkt T_2 sind die Drehzahlen n_15, n_16, n_17, n_18, n_19, und n_22 gleich den Drehzahlen n_13 und n_23, so daß die zuzuschaltenden Schaltelemente des Automatgetriebes 8 sowie das zweite Schaltelement 25 der Rangegruppe 9 synchronisiert sind und geschlossen werden können. Zum Zeitpunkt T_ds wird das Durchschalten des zweiten Schaltelementes 25 der Rangegruppe 9 über einen Positionssensor festgestellt, und der Schaltvorgang des Mehrgruppengetriebes 4 ist beendet.

Die beiden vorbeschriebenen Ausführungsbeispiele weisen den Vorteil auf, daß auf mechanische Synchronisierungen in der Rangegruppe verzichtet werden kann, wodurch sich eine Schleppmomentenreduktion und eine daraus resultierende Reduzierung eines Kraftstoffverbrauches ergibt. Zusätzlich resultieren aus den nicht erforderlichen mechanischen Synchronisierungen Gewichts-, Bauraum- und Kostenvorteile bei der als klauengeschaltete Getriebegruppe ausgeführten Rangegruppe.

Darüber hinaus sind mit dem erfindungsgemäßen Verfahren erhebliche Verkürzungen der Zugkraftunterbrechungszeit während der Änderung der Übersetzung in der Rangegruppe gegenüber herkömmlichen Verfahren erzielbar. Bei dem Ausführungsbeispiel gemäß den Figuren 2 bis 5 erfolgt die Änderung der Übersetzung in der Rangegruppe automatisch, wodurch ein Fahrer vorteilhafterweise entlastet wird.

Mit der Ausführung des erfindungsgemäßen Verfahrens gemäß den Figuren 6 bis 10 ist eine Änderung der Übersetzung in der Rangegruppe mit der Generierung einer Fahrerwunschvorgabe zum Ändern der Übersetzung in der Rangegruppe bei jeder Fahrzeuggeschwindigkeit mit geringer Zugkraftunterbrechungszeit durchführbar, wobei gleichzeitig nach dem Gangwechsel im Mehrgruppengetriebe eine passende Motordrehzahl der neuen Übersetzung des Mehrgruppengetriebes vorliegt, wodurch ein Fahrkomfort und eine Fahrsicherheit, insbesondere an großen Steigungen, erheblich verbessert wird.

### Bezugszeichen

- 1: Antriebsstrang
- 2: Antriebsmaschine
- 3: Anfahrelement
- 4: Mehrgruppengetriebe
- 5: Ausgangswelle
- 6: hydrodynamischer Drehmomentwandler
- 7: geregelte Wandlerkupplung
- 8: Automatgetriebe
- 9: Rangegruppe
- 10: erster Planetenradsatz
- 11: Hohlrad des ersten Planetenradsatzes _
- 12: Sonnenrad des ersten Planetenradsatzes
- 13: Planetenträger des ersten Planetenradsatzes
- 14: zweiter Planetenradsatz
- 15: erstes Sonnenrad des zweiten Planetenradsatzes
- 16: zweites Sonnenrad des zweiten Planetenradsatzes
- 17: gemeinsames Hohlrad des zweiten Planetenradsatzes
- 18: erster Planetenträger des zweiten Planetenradsatzes
- 19: zweiter Planetenträger des zweiten Planetenradsat- zes
- 20: Getriebegehäuse
- 20A: Getriebegehäuse der Rangegruppe
- 21: Sonnenrad der Rangegruppe
- 22: Hohlrad der Rangegruppe
- 23: Planetenträger der Rangegruppe
- 24: erstes Schaltelement der Rangegruppe
- 25: zweites Schaltelement der Rangegruppe
- 26: Automatgetriebewählhebel
- 27: Auswahlschalter
- 28: Pfeil
- 29: Pfeil
- 30: Kreis
- A - E: Schaltelemente des Automatgetriebes
- "D": Drive, Vorwärtsfahrt
- "A1"-"A6": Übersetzung des Automatgetriebes
- H: Übersetzung "high" der Rangegruppe
- L: Übersetzung "low" der Rangegruppe
- m: Moment
- m_mot_e: E-Gas-Moment
- m_mot_f: Fahrermoment
- m_24: Verlauf des Drehmomentes des ersten Schaltelementes der Rangegruppe
- m_25: Verlauf des Drehmomentes des zweiten Schaltelemen- tes der Rangegruppe
- n: Drehzahl
- "N": Neutral
- n_mot: Antriebsdrehzahl der Antriebsmaschine
- n_mot_a: Anschlußdrehzahl
- "O": Offroad, Vorwärtsfahrt
- "P": Parken
- "R": Rückwärtsfahrt
- "t": Schaltzeit
- "T": Zeitpunkt
- T_ds: Durchschaltzeitpunkt
- v_fzg: Fahrzeuggeschwindigkeit
- I - III: Übersetzung des Mehrgruppengetriebes
- III-L: Übersetzung des Mehrgruppengetriebes
- III-H: Übersetzung des Mehrgruppengetriebes
- IV - VIII: Übersetzung des Mehrgruppengetriebes

## Patentansprüche

1. Verfahren zum Steuern eines Antriebsstranges (1) eines Fahrzeugs, insbesondere eines Geländefahrzeugs, mit einer Antriebsmaschine (2), mit einem Mehrgruppengetriebe (4) und einem Abtrieb, wobei das Mehrgruppengetriebe (4) wenigstens aus einem Automatgetriebe (8) und einer nachgeschalteten, über Schaltelemente (24, 25) schaltbaren Rangegruppe (9) besteht, **dadurch gekennzeichnet, dass** bei einer Übersetzungsänderung der Rangegruppe (9) eine Synchronisierung eines zuzuschaltenden Schaltelements (24 bzw. 25) der Rangegruppe (9) über eine Ansteuerung von Schaltelementen (A bis E) des Automatgetriebes (8) durchgeführt wird.

2. Verfahren nach Anspruch 1, **dadurch gekennzeichnet, daß** bei einer Änderung einer Übersetzung der Rangegruppe (9) eine Änderung der Übersetzung des Automatgetriebes (8) derart erfolgt, daß eine Änderung der Übersetzung des Mehrgruppengetriebes (4) kleiner ist als bei einer alleinigen Änderung der Übersetzung der Rangegruppe (9).

3. Verfahren nach Anspruch 1 oder 2, **dadurch gekennzeichnet, daß** eine Änderung der Übersetzung der Rangegruppe (9) in Abhängigkeit einer Fahrerwunschvorgabe erfolgt.

4. Verfahren nach einem der Ansprüche 1 bis 3, **dadurch gekennzeichnet, daß** der Antriebsstrang (1) vor der Änderung der Übersetzung der Rangegruppe (9) durch eine Änderung eines Drehmomentes (m_mot) der Antriebsmaschine (2) entlastet wird.

5. Verfahren nach einem der Ansprüche 1 bis 4, **dadurch gekennzeichnet, daß** eine Drehzahl (n_mot) der Antriebsmaschine (2) in Richtung einer Anschlußdrehzahl (n_mot_a) einer einzustellenden Übersetzung des Mehrgruppengetriebes (4) verändert wird, bei der ein zuzuschaltendes Schaltelement (24 bzw. 25) der Rangegruppe (9) synchron ist.

6. Verfahren nach Anspruch 5, **dadurch gekennzeichnet, daß** die Anschlußdrehzahl (n_mot_a) der Antriebsmaschine (2) in Abhängigkeit der einzustellenden Übersetzung des Mehrgruppengetriebes (4) und einer Fahrzeuggeschwindigkeit (v_fzg) bestimmt wird, so daß bei Erreichen der Anschlußdrehzahl (n_mot_a) eine antriebsmaschinenseitige Eingangsdrehzahl und eine abtriebsseitige Eingangsdrehzahl des zuzuschaltenden Schältelementes (24 bzw. 25) der Rangegruppe (9) gleich ist.

7. Verfahren nach Anspruch 5 oder 6, **dadurch gekennzeichnet, daß** zur Einstellung der Anschlußdrehzahl (n_mot_a) der Antriebsmaschine (2) Schaltelemente (A bis E) des Automatgetriebes (8) angesteuert werden.

8. Verfahren nach einem der Ansprüche 5 bis 7, **dadurch gekennzeichnet, daß** zur Einstellung der Anschlußdrehzahl (n_mot_a) der Antriebsmaschine (2) eine Übertragungsfähigkeit von abzuschaltenden Schaltelementen des Automatgetriebes (8) reduziert wird.

9. Verfahren nach Anspruch 8, **dadurch gekennzeichnet, daß** bei Vorliegen der Anschlußdrehzahl (n_mot_a) der Antriebsmaschine (2) eine Übertragungsfähigkeit der abzuschaltenden Schaltelemente des Automatgetriebes (8) aufgehoben wird, während zuzuschaltende Schaltelemente einer einzustellenden Übersetzung des Automatgetriebes (8) in einem Schlupfbetrieb gehalten werden.

10. Verfahren nach Anspruch 9, **dadurch gekennzeichnet, daß** die zuzuschaltenden Schaltelemente des Automatgetriebes (8) und der Rangegruppe (9) im synchronisierten Zustand geschlossen werden.

11. Verfahren nach einem der Ansprüche 1 bis 10, **dadurch gekennzeichnet, daß** die Änderung der Übersetzung der Rangegruppe (9) und die damit einhergehende Änderung der Übersetzung des Automatgetriebes (8) bei Vorliegen der Fahrerwunschvorgabe durchgeführt wird.

12. Verfahren nach einem der Ansprüche 1 bis 11, **dadurch gekennzeichnet, daß** die Änderung der Übersetzung der Rangegruppe (9) und die damit einhergehende Änderung der Übersetzung des Automatgetriebes (8) bei Vorliegen eines definierten Betriebszustandes automatisch erfolgt.

13. Verfahren nach einem der Ansprüche 1 bis 12, **dadurch gekennzeichnet, daß** die Änderung der Übersetzung des Automatgetriebes (8) derart auf die Änderung der Übersetzung der Rangegruppe (9) abgestimmt ist, daß eine Änderung der Übersetzung des Mehrgruppengetriebes im wesentlichen unterbleibt.

## Claims

1. Method for the control of the driveline (1) of a vehicle, especially of an offhighway vehicle, with a driving motor (2), with a multiple range-change transmission (4) and an output, with the multiple range-change transmission (4) being composed of at least an automatic transmission (8) and a rear-mounted range-change unit (9) controllable via shifting components (24, 25), **characterized in that** a change in the ratio of the range-change unit (9) results in synchronization of a shifting component (24 or 25) of the range-change unit (9) to be engaged via activation of shifting components (A thru E) of the automatic transmission (8).

2. Method according to claim 1, **characterized in that** a change in the ratio of the range-change unit (9) results in a change in the ratio of the automatic transmission (8) in such a manner that a change in the ratio of the multiple range-change transmission (4) is smaller than it would be if there was only a change in the ratio of the range-change unit (9).

3. Method according to claim 1 or 2, **characterized in that** a change in the ratio of the range-change unit (9) is performed dependent on the driver's request.

4. Method according to one of the claims 1 thru 3, **characterized in that** before the change in ratio of the range-change unit (9), the driveline (1) is relieved through a change in torque (m_mot) of the driving motor (2).

5. Method according to one of the claims 1 thru 4, **characterized in that** a speed (n_mot) of the driving motor (2) is altered towards a connecting speed (n_mot_a) of a ratio of the multiple range-change transmission (4) to be set, at which a shifting component (24 or 25) of the range-change unit (9) to be engaged is synchronous.

6. Method according to claim 5, **characterized in that** the connecting speed (n_mot_a) of the driving motor (2) is determined dependent on the ratio of the multiple range-change transmission (4) to be set, and on a vehicle speed (v_fzg), so that when the connecting speed (n_mot_a) is reached, a driving-motor-based input speed and an output-based input speed of the shifting component (24 or 25) of the range-change unit (9) to be engaged are identical.

7. Method according to claim 5 or 6, **characterized in that** shifting components (A thru E) of the automatic transmission (8) are activated for adjustment of the connecting speed (n_mot_a) of the driving motor (2).

8. Method according to one of the claims 5 thru 7, **characterized in that** the transmission capacity of shifting components of the automatic transmission (8) to be disengaged is reduced for adjustment of the connecting speed (n_mot_a) of the driving motor (2).

9. Method according to claim 8, **characterized in that** with realization of the connecting speed (n_mot_a) of the driving motor (2), the transmission capacity of the shifting components of the automatic transmission (8) to be disengaged is canceled while shifting components to be engaged for a ratio of the automatic transmission (8) to be set are maintained in a slip mode.

10. Method according to claim 9, **characterized in that** the shifting components of the automatic transmission (8) and the range-change unit (9) to be engaged are locked in the synchronized condition.

11. Method according to one of the claims 1 thru 10, **characterized in that** the change in ratio of the range-change unit (9) and the concomitant change in ratio of the automatic transmission (8) are performed if a driver's request exists.

12. Method according to one of the claims 1 thru 11, **characterized in that** the change in ratio of the range-change unit (9) and the concomitant change in ratio of the automatic transmission (8) are automatically performed if a defined operating condition exists.

13. Method according to one of the claims 1 thru 12, **characterized in that** the change in ratio of the automatic transmission (8) is tuned to the change in ratio of the range-change unit (9) in such a manner that there is essentially no change in ratio of the multiple range-change transmission.

## Revendications

1. Procédé de commande d'une chaîne cinématique (1) d'un véhicule, en particulier d'un véhicule tout-terrain, doté d'un moteur d'entraînement (2), d'une transmission à plusieurs groupes (4) et d'une sortie, sachant que la transmission à plusieurs groupes (4) est constituée d'au moins une boîte automatique (8) et d'un groupe-relais (9) monté en aval et enclenchable par l'intermédiaire d'éléments de commande (24, 25), **caractérisé en ce que** lors d'une variation du rapport de démultiplication du groupe-relais (9) est exécutée une synchronisation d'un élément de commande à enclencher (24 ou 25) du groupe-relais (9), et cela par le pilotage d'éléments de commande (A à E) de la boîte automatique (8).

2. Procédé selon la revendication 1, **caractérisé en ce que** lors d'une variation du rapport de démultiplication du groupe-relais (9) est effectuée une variation du rapport de démultiplication de la boîte automatique (8), et cela de façon à ce que une variation du rapport de démultiplication de la transmission à plusieurs groupes (4) est inférieure à celle obtenue en cas d'une seule variation du rapport de démultiplication du groupe-relais (9).

3. Procédé selon la revendication 1 ou 2, **caractérisé en ce que** une variation du rapport de démultiplication du groupe-relais (9) est effectuée en fonction d'une consigne du souhait du conducteur.

4. Procédé selon une des revendications 1 à 3, **caractérisé en ce que** la sollicitation de la chaîne cinématique (1) est réduite avant la variation du rapport de démultiplication du groupe-relais (9) par une variation d'un couple (m_mot) du moteur d'entraînement (2).

5. Procédé selon une des revendications 1 à 4, **caractérisé en ce que** un régime (n_mot) du moteur d'entraînement (2) est varié dans le sens d'une vitesse de synchronisation (n_mot_a) d'un rapport de démultiplication à régler de la transmission à plusieurs groupes (4), lors de laquelle un élément de commande à enclencher (24 ou 25) du groupe-relais (9) est synchrone.

6. Procédé selon la revendication 5, **caractérisé en ce que** la vitesse de synchronisation (n_mot_a) du moteur d'entraînement (2) est déterminée en fonction du rapport de démultiplication à régler de la transmission à plusieurs groupes (4) et une vitesse de véhicule (v_fzg), et cela de façon à ce que au moment où la vitesse de synchronisation (n_mot_a) est atteinte, un régime d'entrée du côté du moteur d'entraînement et un régime d'entrée du côté sortie de l'élément de commande à enclencher (24 ou 25) du groupe-relais (9) sont égaux.

7. Procédé selon la revendication 5 ou 6, **caractérisé en ce que** pour le réglage de la vitesse de synchronisation (n_mot_a) du moteur d'entraînement (2) sont pilotés des éléments de commande (A à E) de la boîte automatique (8).

8. Procédé selon une des revendications 5 à 7, **caractérisé en ce que** pour le réglage de la vitesse de synchronisation (n_mot_a) du moteur d'entraînement (2) est réduite une capacité de transmission d'éléments de commande à déconnecter de la boîte automatique (8).

9. Procédé selon la revendication 8, **caractérisé en ce que** en cas de présence de la vitesse de synchronisation (n_mot_a) du moteur d'entraînement (2) est annulée une capacité de transmission des éléments de commande à déconnecter de la boîte automatique (8), tandis que des éléments de commande à enclencher pour le réglage d'un rapport de démultiplication de la boîte automatique (8) sont maintenus dans un mode de patinage.

10. Procédé selon la revendication 9, **caractérisé en ce que** les éléments de commande à enclencher de la boîte automatique (8) et du groupe-relais (9) sont fermés dans l'état synchronisé.

11. Procédé selon une des revendications 1 à 10, **caractérisé en ce que** la variation du rapport de démultiplication du groupe-relais (9) et la variation en résultante du rapport de démultiplication de la boîte automatique (8) sont effectuées en cas de présence d'une consigne du souhait du conducteur.

12. Procédé selon une des revendications 1 à 11, **caractérisé en ce que** la variation du rapport de démultiplication du groupe-relais (9) et la variation en résultante du rapport de démultiplication de la boîte automatique (8) sont effectuées en cas de présence d'un état de fonctionnement défini.

13. Procédé selon une des revendications 1 à 12, **caractérisé en ce que** la variation du rapport de démultiplication de la boîte automatique (8) est adaptée de telle manière à la variation du rapport de démultiplication du groupe-relais (9) qu'une variation du rapport de démultiplication de la transmission à plusieurs groupes n'a pour l'essentiel pas lieu.
